# EUROPEAN PATENT SPECIFICATION

(11) **EP 3 767 803 B1**
(45) Date of publication and mention of the grant of the patent: **17.11.2021**
(21) Application number: 19187292.8
(22) Date of filing: 19.07.2019
(51) Int. Cl.: H02K 7/08, F16C 35/073, H01R 39/14, H02K 13/00

(54) **ELECTRIC GENERATOR**
STROMGENERATOR
GÉNÉRATEUR ÉLECTRIQUE

(43) Date of publication of application: 20.01.2021
(73) Proprietor: Mahle International GmbH, 70376 Stuttgart (DE)
(72) Inventor: BERCE, Mitja, 5270 Ajdovscina (SI); MARIC, Marjo, 5290 Sempter pri Gorici (SI); TUREL, Ales, 5290 Sempeter pri Gorici (SI)
(74) Representative: BRP Renaud & Partner mbB Rechtsanwälte Patentanwälte Steuerberater

(56) References cited:
- EP-A1- 3 229 352
- FR-A1- 2 613 880

## Description

The invention relates to an electric generator, specifically an alternator for a motor vehicle, in accordance with the preamble to Claim 1.

An electric generator is employed for the generation of a single-phase or multiphase alternating current, and has a stator and a rotor, which is accommodated in the interior of the stator. The rotor comprises at least two claw poles, which are fitted to the shaft in a non-rotating arrangement. The claw poles comprise a plurality of claw pole teeth, which constitute an outer circumference of the rotor, and are arranged alternately on said outer circumference of the rotor. By the application of an excitation current to an excitation coil, a magnetic field is generated around the claw poles, wherein the poles of the magnetic field correspond to one claw pole respectively, and alternate on the outer circumference by way of the alternating claw pole teeth. If the rotor is rotated, an alternating current is generated in the stator windings.

In order to feed the excitation current to the excitation coil, the electric generator customarily comprises two sliprings. The sliprings are arranged on the shaft, and can tap-off the excitation current from static components, by means of brushes, even during the rotation of the shaft. The sliprings are connected to the excitation coil by means of two electrical conductors, wherein the electrical conductors, in certain areas, are enclosed in an insulating sheathing, and rest against one of the sliprings respectively at a contact point. The electrical conductors are customarily comprised of copper, and the sliprings can be comprised, for example of copper, copper-tin alloys, carbon-based materials or sintered metals. Permanent contact between the sliprings and the electrical conductors is customarily achieved by soldering or welding. Such known arrangements of sliprings are disclosed in EP3229352 and FR2613880.

The service life of the electric generator is essentially dependent upon the abrasion of the sliprings against the brushes. Disadvantageously, some abrasion-resistant materials are difficult to solder or weld. For this reason, other materials must be selected for the sliprings, thus frequently impacting negatively upon the service life of the electric generator.

The object of the invention is therefore the disclosure of an improved, or at least an alternative form of embodiment of the electric generator of the generic type, which overcomes the aforementioned disadvantages.

According to the invention, this object is fulfilled by the subject matter of the independent Claim 1. Advantageous forms of embodiment are the object of the dependent claims.

The present invention is based upon the general consideration of the avoidance of soldering or welding in the formation of contact between sliprings and electrical conductors in an electric generator. The electric generator, specifically an alternator, is appropriate for a motor vehicle, and comprises a rotor and a stator. The rotor comprises at least two claw poles which are attached to a shaft, having a plurality of claw pole teeth which constitute an outer circumference of the rotor. At least one excitation coil is arranged between the claw poles, generating a magnetic field which alternates on the claw pole teeth on the outer circumference of the rotor. A slipring arrangement of the electric generator further comprises two sliprings, which are arranged with an axial distance to the rotor at the shaft, and fit to a shaft surface. The slipring arrangement further comprises two electrical conductors, which are in respective contact with one of the sliprings at one contact point respectively, and provide the electrical contact between the sliprings of the slipring arrangement and the excitation coil. The electrical conductors, at least in certain areas, are respectively enclosed in an insulating sheathing, wherein the respective insulating sheathing constitutes the shaft surface at least at the respective contact point. According to the invention, the respective electrical conductor, at the respective contact point, comprises at least one compression moulding, which is configured to project from the respective insulating sheathing, radially to the longitudinal direction of the shaft, and secures the respective slipring to the shaft in a clamping arrangement.

At the contact point, the insulating sheathing constitutes the shaft surface, with which the respective slipring is in contact. The compression moulding is configured on the respective contact point, and projects from the insulating moulding. The slipring compresses the compression moulding against the shaft surface, and is thus secured to the shaft in a clamping arrangement. In the electric generator according to the invention, soldering and welding between the respective slipring and the respective electrical conductor are advantageously avoided. Advantageously, the at least one compression moulding can establish an electrical contact between the respective electrical conductor and the respective slipring without any additional joining technique. Consequently, the slipring and the electrical conductor can be comprised of an abrasion-resistant material, which cannot be processed, or is difficult to process using conventional bonding techniques. In this manner, abrasion of the sliprings against the brushes can be reduced, and the service life of the electric generator is thus significantly increased.

Advantageously, it can be provided that the at least one compression moulding is configured with a ramped profile. The compression moulding, for example, can expand from zero to a few millimetres, thus specifically simplifying the fitting of the respective slipring to the shaft.

In an advantageous configuration of the electric generator according to the invention, it is provided that the respective insulating sheathing, with the respective electrical conductor, is secured in a slot-like recess in the shaft. The respective insulating sheathing and the shaft thus constitute the combined shaft surface, upon which the respective slipring is secured in circumferential contact. The respective compression moulding projects from the respective insulating sheathing and from the shaft surface, such that the respective slipring is secured to the shaft in a clamping arrangement.

In an alternative configuration of the electric generator according to the invention, it is advantageously provided that the respective insulating sheathing encloses the shaft, at least in certain areas, radially to the longitudinal direction of the shaft. Axially, the respective insulating sheathing thus constitutes the shaft surface, at least in certain areas, upon which the respective slipring is secured in circumferential contact. The respective compression moulding projects from the insulating sheathing which, at least under the slipring, constitutes the shaft surface. The respective slipring is thus in full contact with the insulating sheathing, and is secured to the shaft in a clamping arrangement by the respective compression moulding. Additionally, it is advantageously provided that form-fitting or press-fitting elements are formed on the shaft and/or on the inner surface of the slipring arrangement. The slipring arrangement is then fixed to the shaft via the form-fitting or press-fitting elements in a form-fitting or in a press-fitting manner.

Advantageously, the respective insulating sheathing can be comprised of an insulating material, especially of a plastic material. The electrical conductor can then, for example, be embedded in the insulating sheathing.

The respective slipring is arranged on the shaft surface and go around the shaft. In this case, a diameter of the shaft surface at the respective contact point corresponds to an inner diameter of the respective slipring. To simplify the mounting of the sliprings, it may be additionally provided that the diameter of the shaft surface at the one contact point differs from the diameter of the shaft surface at the other contact point. Thus, the respective slipsrings can be mounted on the shaft surface one after another.

In an advantageous configuration of the electric generator according to the invention, it is provided that the respective electrical conductor extends along the longitudinal direction of the shaft from the respective contact point to the claw poles. At the claw poles, the respective electrical conductor can then project radially from the shaft and can form an electrical contact element. In this way, the excitation coil is electrically connected to the electrical contact element and via the respective electrical conductor to the respective slipring. At the claw poles, the respective insulating sheathing can project radially from the shaft with an axial distance to the electrical contact element and can form an insulating collar between the claw poles and the electrical contact element.
In the electric generator according to the invention, the respective slipring is secured to the shaft in a clamping arrangement. Specifically, soldering and welding between the respective slipring and the respective electrical conductor in the electric generator can be avoided. Accordingly, materials can be employed for the slipring which cannot be soldered or welded, or can only be soldered or welded with difficulty. By means of sliprings formed of such materials, the service life of the electric generator can be significantly increased.

The invention further relates to a method for producing the electric generator. In the electric generator, the diameter of the shaft surface at the one contact point differs from the diameter of the shaft surface at the other contact point. In the method according to the invention, the respective sliprings are mounted on the shaft one after another.

Advantageously, it can be provided that the slipring arrangement of the electric generator encloses the shaft, and the slipring arrangement is mounted on the shaft in a form-fitting or in a press-fitting manner. Additionally, the slipring arrangement can be secured on the shaft with form-fitting or press-fitting elements which are formed on the shaft and/or on an inner surface of the slipring arrangement. The sliprings can be mounted on the shaft surface after the slipring arrangement is mounted on the shaft. Alternatively, the sliprings can be mounted on the shaft surface in a form-fitting manner before the slipring arrangement is mounted on the shaft. Then, an inner diameter of the slipring arrangement can be increased at the contact points by and after mounting on the shaft. By this means, after the slipring arrangement is mounted on the shaft, the sliprings are mounted on the shaft surface in a press-fitting manner.

Further important characteristics and advantages of the invention proceed from the sub-claims, from the drawings, and from the associated description of the figures, with reference to the drawings.

It is understood that the above-mentioned characteristics, and those described hereinafter, can not only be employed in the respective combination indicated, but also in other combinations, or in isolation, without departing from the scope of the present invention.

Preferred exemplary embodiments of the invention are represented in the drawings, and are described in greater detail in the following description, wherein the same reference symbols are applied to identical, similar or functionally equivalent components.

Herein, schematically in each case:
- Fig. 1: shows a view of an electric generator according to the invention;
- Fig. 2: shows part of a slipring arrangement in an electric generator according to the invention, in cross-section;
- Fig. 3: shows a view of a slipring arrangement in an electric generator according to the invention;
- Fig. 4: shows an enlarged sectional view of a slipring arrangement, at a contact point between a slipring and an electrical conductor.

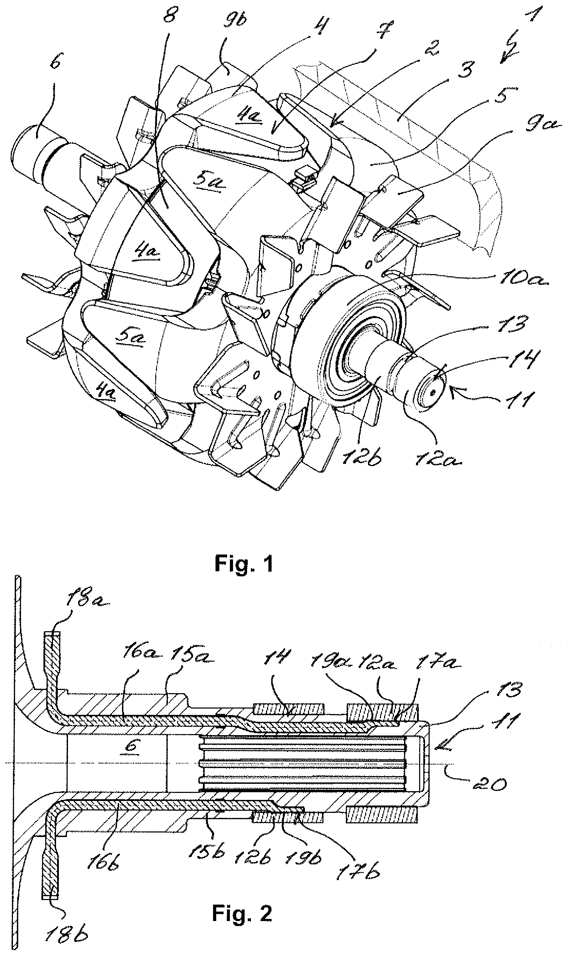

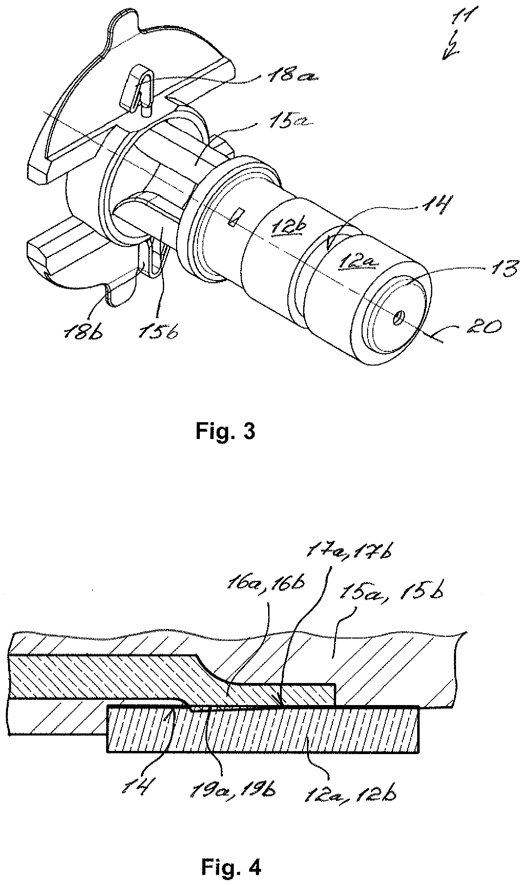

Fig. 1 shows a view of an electric generator 1 according to the invention. The electric generator 1 - in the present exemplary embodiment, an alternator - comprises a rotor 2 and a stator 3, which is represented only schematically here. The rotor 2 comprises two claw poles 4 and 5, which are attached to a shaft 6 of the rotor 2, and have a plurality of claw pole teeth 4a and 5a. The claw pole teeth 4a and 5a thus constitute an outer circumference 7 of the rotor 2. Between the claw poles 4 and 5 at least one excitation coil 8 is arranged which, upon the application thereto of an excitation current, generates a magnetic field on the outer circumference 7 of the rotor 2. The claw poles 4 and 5 respectively correspond to one pole of the magnetic field, such that the poles of the magnetic field on the outer circumference 7 of the rotor 2 alternate in accordance with the claw pole teeth 4a and 5a. Upon a rotation of the rotor 2 and the shaft 6, an alternating current is generated in the windings of the stator 3, and is tapped-off. Fan impellers 9a and 9b are moreover arranged on either side of the shaft 6, for the cooling of the electric generator 1. The rotor 2 with the shaft 6, by means of the rotor bearings 10a and 10b - only rotor bearing 10a is visible here - is arranged to rotate within the stator 3. In order to permit the application of the excitation current to the excitation coil 8, the electric generator moreover comprises a slipring arrangement 11. The slipring arrangement 11 comprises two sliprings 12a and 12b, which are arranged with an axial distance to the rotor 2 at one shaft end 13 of the shaft 6, and circumferentially enclose the shaft 6. The sliprings 12a and 12b thus lie on a shaft surface 14. A detailed design of the slipring arrangement 11 in the electric generator 1 according to the invention is illustrated in Fig. 2 and Fig. 3.

Fig. 2 shows part of the electric generator 1 according to the invention, in cross-section. Fig. 3 shows a view of the slipring arrangement 11. Here, the slipring arrangement 11 comprises two electrical conductors 16a and 16b which, in certain areas, are respectively enclosed by an insulating sheathing 15a and 15b. The insulating sheathing 15a and 15b consists of an insulating material, especially of a plastic material. The electrical conductors 16a and 16b engage with the sliprings 12a and 12b at the contact points 17a and 17b, such that the excitation current can be fed from the sliprings 12a and 12b via the electrical conductors 16a and 16b to electrical contact elements 18a and 18b. By means of the electrical contact elements 18a and 18b, the excitation coil 8 - which is not represented here - can be electrically bonded to the exterior via the slipring arrangement 11.

At the contact points 17a and 17b, the respective electrical conductors 16a and 16b respectively comprise a compression moulding 19a and 19b, which project from the respective insulating sheathing 15a and 15b, radially to longitudinal direction 20 of the shaft 6. In this exemplary embodiment, the insulating sheathings 15a and 15b also form the shaft surface 14, with which the sliprings 12a and 12b are in contact. Further to the attachment of the respective slipring 12a and 12b to the shaft 6, the material of the electrical conductor 16a and 16b is subject to elastic deformation at the respective compression moulding 19a and 19b, and the respective slipring 12a and 12b is secured to the shaft 6 in a clamping arrangement, as shown in an enlarged view in Fig. 4. The compression mouldings 19a and 19b are ramped, and expand in the direction of the rotor 2, in order to facilitate the fitting of the sliprings 2a and 12b to the shaft 6.

In the electric generator 1 according to the invention, the sliprings 12a and 12b are secured to the shaft 6 in a clamping arrangement, whereby soldering and welding between the sliprings 12a and 12b and the electrical conductors 16a and 16b are avoided. Accordingly, a material can be employed for the sliprings 12a and 12b, which can only be soldered or welded with difficulty.

## Claims

1. Electric generator (1), specifically an alternator for a motor vehicle, comprising a rotor (2) and a stator (3),
- wherein the rotor (2) comprises at least two claw poles (4, 5), which are attached to a shaft (6),
- wherein the claw poles (4, 5) comprises a plurality of claw pole teeth (4a, 5a), which constitute an outer circumference (7) of the rotor (2),
- wherein at least one excitation coil (8) is arranged between the claw poles (4, 5), which generates a magnetic field, which alternates on the claw pole teeth (4a, 5a) on the outer circumference (7) of the rotor (2),
- wherein a slipring arrangement (11) of the electric generator (1) comprises two sliprings (12a, 12b) which are arranged, with an axial distance to the rotor (2), at the shaft (6) and fit to a shaft surface (14),
- wherein the slipring arrangement (11) comprises two electrical conductors (16a, 16b), which are in respective contact with one of the sliprings (12a, 12b) at one contact point (17a, 17b) respectively, and the sliprings (12a, 12b) in the slipring arrangement (11) are electrically connected to the excitation coil (8) by means of the two electrical conductors (16a, 16b), and
- wherein the electrical conductors (16a, 16b) are respectively enclosed, at least in certain areas, by an insulating sheathing (15a, 15b) which, at least at the respective contact point (17a, 17b), constitutes the shaft surface (14) with which the sliprings (12a, 12b) are in contact
**characterized in that**
the respective electrical conductor (16a, 16b), at the respective contact point (17a, 17b), comprises at least one compression moulding (19a, 19b), which projects from the respective insulating sheathing (15a, 15b) radially to the longitudinal direction (20) of the shaft (6), and secures the respective slipring (12a, 12b) to the shaft (6) in a clamping arrangement.

2. Electric generator according to claim 1,
**characterized in that**
the at least one compression moulding (19a, 19b) establishes an electrical contact between the respective electrical conductor (16a, 16b) and the respective slipring (12a, 12b).

3. Electric generator according to claim 1 or 2,
**characterized in that**
the at least one compression moulding (19a, 19b) is configured with a ramped profile.

4. Electric generator according to any one of claims 1 to 3,
**characterized in that**
- the respective insulating sheathing (15a, 15b), with the respective electrical conductor (16a, 16b), is secured in a slot-like recess in the shaft (6), and
- the respective insulating sheathing (15a, 15b) and the shaft (6) form together the shaft surface (14), upon which the respective slipring (12a, 12b) is secured in circumferential contact.

5. Electric generator according to any one of claims 1 to 3,
**characterized in that**
- the respective insulating sheathing (15a, 15b), with the respective electrical conductors (16a, 16b), encloses the shaft (6), at least in certain areas, radially to the longitudinal direction of the shaft (20), and
- the respective insulating sheathing (15a, 15b), at least in certain areas, constitutes the shaft surface (14), upon which the respective slipring (12a, 12b) is secured in circumferential contact.

6. Electric generator according to claim 5,
**characterized in that**
- form-fitting or press-fitting elements are formed on the shaft (6) and/or on the inner surface of the slipring arrangement (11), and
- the slipring arrangement (11) is fixed to the shaft (6) via the form-fitting or press-fitting elements in a form-fitting or in a press-fitting manner.

7. Electric generator according to one of the preceding claims,
**characterized in that**
the respective insulating sheathing (15a, 15b) is comprised of an insulating material (15), especially of a plastic material.

8. Electric generator according to one of the preceding claims,
**characterized in that**
- a diameter of the shaft surface (14) at the respective contact point (17a, 17b) corresponds to an inner diameter of the respective slipring (12a, 12b), and
- the diameter of the shaft surface (14) at the one contact point (17a, 17b) differs from the diameter of the shaft surface (14) at the other contact point (17a, 17b), so that the respective sliprings (12a, 12b) can be mounted on the shaft one after another.

9. Electric generator according to one of the preceding claims,
**characterized in that**
- the respective electrical conductor (16a, 16b) extends along the longitudinal direction (20) of the shaft (6) from the respective contact point (17a, 17b) to the claw poles (4, 5), and
- at the claw poles (4, 5), the respective electrical conductor (17a, 17b) projects radially from the shaft (6) and forms an electrical contact element (18a, 18b), which is electrically connected to the excitation coil (8).

10. Electric generator according to claim 9,
**characterized in that**
at the claw poles (4, 5), the respective insulating sheathing (15a, 15b) projects radially from the shaft (6) with an axial distance to the electrical contact element (18a, 18b) and forms an insulating collar between the claw poles (4, 5) and the electrical contact element (18a, 18b).

11. Method for producing the electric generator (1) according to any one of the preceding claims,
wherein the diameter of the shaft surface (14) at the one contact point (17a, 17b) differs from the diameter of the shaft surface (14) at the other contact point (17a, 17b), and the respective sliprings (12a, 12b) are mounted on the shaft one after another.

12. Method according to claim 11,
**characterized in that**,
the slipring arrangement (11) of the electric generator (1) encloses the shaft (6), and the slipring arrangement (11) is mounted on the shaft (6) in a form-fitting or in a press-fitting manner.

13. Method according to claim 12,
**characterized in that**,
the slipring arrangement (11) is secured on the shaft (6) with form-fitting or press-fitting elements (21) formed on the shaft (6) and/or on an inner surface of the slipring arrangement (11).

14. Method according to claim 12 or 13,
**characterized in that**,
- before the slipring arrangement (11) is mounted on the shaft (6), the sliprings (12a, 12b) are mounted on the shaft surface (14) formed by the insulating sheathing (15a, 15b) in a form-fitting manner, and
- an inner diameter of the slipring arrangement (11) is increased at the contact points (17a, 17b) by and after mounting on the shaft (6), so that after the slipring arrangement (11) is mounted on the shaft (6), the sliprings (12a, 12b) are mounted on the shaft surface (14) in a press-fitting manner.

15. Method according to claim 12 or 13,
**characterized in that**,
the sliprings (12a, 12b) are mounted on the slipring arrangement (11) after the slipring arrangement (11) is mounted on the shaft (6).

## Patentansprüche

1. Elektrischer Generator (1), insbesondere ein Wechselstromgenerator für ein Kraftfahrzeug, der einen Rotor (2) und einen Stator (3) umfasst,
- wobei der Rotor (2) mindestens zwei Klauenpole (4, 5) umfasst, die an einer Welle (6) befestigt sind,
- wobei die Klauenpole (4, 5) eine Vielzahl von Klauenpolzähnen (4a, 5a) umfassen, die einen Außenumfang (7) des Rotors (2) bilden,
- wobei zwischen den Klauenpolen (4, 5) mindestens eine Erregerspule (8) angeordnet ist, die ein Magnetfeld erzeugt, das an den Klauenpolzähnen (4a, 5a) an dem Außenumfang (7) des Rotors (2) wechselt,
- wobei eine Schleifringanordnung (11) des elektrischen Generators (1) zwei Schleifringe (12a, 12b) umfasst, die mit einem axialen Abstand zu dem Rotor (2) an der Welle (6) angeordnet sind und auf eine Wellenoberfläche (14) passen,
- wobei die Schleifringanordnung (11) zwei elektrische Leiter (16a, 16b) umfasst, die jeweils an einer Kontaktstelle (17a, 17b) mit einem der Schleifringe (12a, 12b) in entsprechendem Kontakt stehen, und die Schleifringe (12a, 12b) in der Schleifringanordnung (11) mittels der zwei elektrischen Leiter (16a, 16b) mit der Erregerspule (8) elektrisch verbunden sind, und
- wobei die elektrischen Leiter (16a, 16b) jeweils zumindest in gewissen Bereichen von einer Isolierummantelung (15a, 15b) umschlossen sind, die zumindest an der jeweiligen Kontaktstelle (17a, 17b) die Wellenoberfläche (14) bildet, mit der die Schleifringe (12a, 12b) in Kontakt sind, **dadurch gekennzeichnet, dass** der jeweilige elektrische Leiter (16a, 16b) an der jeweiligen Kontaktstelle (17a, 17b) mindestens ein Formpressstück (19a, 19b) umfasst, das radial zu der Längsrichtung (20) der Welle (6) von der jeweiligen Isolierummantelung (15a, 15b) vorsteht und den jeweiligen Schleifring (12a, 12b) in einer Klemmanordnung an der Welle (6) fixiert.

2. Elektrischer Generator nach Anspruch 1,
**dadurch gekennzeichnet, dass**
das mindestens eine Formpressstück (19a, 19b) einen elektrischen Kontakt zwischen dem jeweiligen elektrischen Leiter (16a, 16b) und dem jeweiligen Schleifring (12a, 12b) herstellt.

3. Elektrischer Generator nach Anspruch 1 oder 2,
**dadurch gekennzeichnet, dass**
das mindestens eine Formpressstück (19a, 19b) mit einem Rampenprofil konfiguriert ist.

4. Elektrischer Generator nach einem der Ansprüche 1 bis 3,
**dadurch gekennzeichnet, dass**
- die jeweilige Isolierummantelung (15a, 15b) mit dem jeweiligen elektrischen Leiter (16a, 16b) in einer schlitzartigen Ausnehmung in der Welle (6) fixiert ist, und
- die jeweilige Isolierummantelung (15a, 15b) und die Welle (6) zusammen die Wellenoberfläche (14) bilden, auf der der jeweilige Schleifring (12a, 12b) in Umfangskontakt fixiert ist.

5. Elektrischer Generator nach einem der Ansprüche 1 bis 3,
**dadurch gekennzeichnet, dass**
- die jeweilige Isolierummantelung (15a, 15b) mit den jeweiligen elektrischen Leitern (16a, 16b) die Welle (6) zumindest in gewissen Bereichen radial zu der Längsrichtung der Welle (20) umschließt, und
- die jeweilige Isolierummantelung (15a, 15b) zumindest in gewissen Bereichen die Wellenoberfläche (14) bildet, auf der der jeweilige Schleifring (12a, 12b) in Umfangskontakt fixiert ist.

6. Elektrischer Generator nach Anspruch 5,
**dadurch gekennzeichnet, dass**
- auf der Welle (6) und/oder auf der Innenfläche der Schleifringanordnung (11) Formschluss- oder Presspassungselemente ausgebildet sind, und
- die Schleifringanordnung (11) über die Formschluss- oder Presspassungselemente formschlüssig oder presspassend an der Welle (6) befestigt ist.

7. Elektrischer Generator nach einem der vorstehenden Ansprüche,
**dadurch gekennzeichnet, dass**
die jeweilige Isolierummantelung (15a, 15b) aus einem Isoliermaterial (15), insbesondere aus einem Kunststoffmaterial, besteht.

8. Elektrischer Generator nach einem der vorstehenden Ansprüche, **dadurch gekennzeichnet, dass**
- ein Durchmesser der Wellenoberfläche (14) an der jeweiligen Kontaktstelle (17a, 17b) einem Innendurchmesser des jeweiligen Schleifrings (12a, 12b) entspricht, und
- sich der Durchmesser der Wellenoberfläche (14) an der einen Kontaktstelle (17a, 17b) von dem Durchmesser der Wellenoberfläche (14) an der anderen Kontaktstelle (17a, 17b) unterscheidet, sodass die jeweiligen Schleifringe (12a, 12b) nacheinander auf der Welle montiert werden können.

9. Elektrischer Generator nach einem der vorstehenden Ansprüche,
**dadurch gekennzeichnet, dass**
- sich der jeweilige elektrische Leiter (16a, 16b) entlang der Längsrichtung (20) der Welle (6) von der jeweiligen Kontaktstelle (17a, 17b) zu den Klauenpolen (4, 5) erstreckt, und
- an den Klauenpolen (4, 5) der jeweilige elektrische Leiter (17a, 17b) radial von der Welle (6) vorspringt und ein elektrisches Kontaktelement (18a, 18b) bildet, das mit der Erregerspule (8) elektrisch verbunden ist.

10. Elektrischer Generator nach Anspruch 9,
**dadurch gekennzeichnet, dass**
an den Klauenpolen (4, 5) die jeweilige Isolierummantelung (15a, 15b) mit einem axialen Abstand zu dem elektrischen Kontaktelement (18a, 18b) radial von der Welle (6) vorsteht und einen Isolierkragen zwischen den Klauenpolen (4, 5) und dem elektrischen Kontaktelement (18a, 18b) bildet.

11. Verfahren zum Herstellen des elektrischen Generators (1) nach einem der vorstehenden Ansprüche, wobei sich der Durchmesser der Wellenoberfläche (14) an der einen Kontaktstelle (17a, 17b) von dem Durchmesser der Wellenoberfläche (14) an der anderen Kontaktstelle (17a, 17b) unterscheidet und die jeweiligen Schleifringe (12a, 12b) nacheinander auf der Welle montiert werden.

12. Verfahren nach Anspruch 11,
**dadurch gekennzeichnet, dass**
die Schleifringanordnung (11) des elektrischen Generators (1) die Welle (6) umschließt und die Schleifringanordnung (11) formschlüssig oder presspassend auf der Welle (6) montiert wird.

13. Verfahren nach Anspruch 12,
**dadurch gekennzeichnet, dass**
die Schleifringanordnung (11) mit auf der Welle (6) und/oder auf einer Innenfläche der Schleifringanordnung (11) ausgebildeten Formschluss- oder Presspassungselementen (21) auf der Welle (6) fixiert wird.

14. Verfahren nach Anspruch 12 oder 13,
**dadurch gekennzeichnet, dass**,
- bevor die Schleifringanordnung (11) auf der Welle (6) montiert wird, die Schleifringe (12a, 12b) formschlüssig auf der von der Isolierummantelung (15a, 15b) gebildeten Wellenoberfläche (14) montiert werden, und
- ein Innendurchmesser der Schleifringanordnung (11) an den Kontaktstellen (17a, 17b) durch und nach der Montage auf der Welle (6) vergrößert wird, sodass nach der Montage der Schleifringanordnung (11) auf der Welle (6) die Schleifringe (12a, 12b) presspassend auf der Wellenoberfläche (14) montiert werden.

15. Verfahren nach Anspruch 12 oder 13,
**dadurch gekennzeichnet, dass**
die Schleifringe (12a, 12b) nach der Montage der Schleifringanordnung (11) auf der Welle (6) auf die Schleifringanordnung (11) montiert werden.

## Revendications

1. Générateur électrique (1), spécifiquement un alternateur pour un véhicule à moteur, comprenant un rotor (2) et un stator (3),
- dans lequel le rotor (2) comprend au moins deux pôles à griffes (4, 5) qui sont fixés à un arbre (6),
- dans lequel les pôles à griffes (4, 5) comprennent une pluralité de dents de pôle à griffes (4a, 5a), qui constituent une circonférence externe (7) du rotor (2),
- dans lequel au moins une bobine d'excitation (8) est agencée entre les pôles à griffes (4, 5), qui génère un champ magnétique, qui alterne sur les dents de pôles à griffes (4a, 5a) sur la circonférence externe (7) du rotor (2),
- dans lequel un agencement de bague collectrice (11) du générateur électrique (1) comprend deux bagues collectrices (12a, 12b) qui sont agencées, avec une distance axiale jusqu'au rotor (2), au niveau de l'arbre (6) et fixées à une surface d'arbre (14),
- dans lequel l'agencement de bague collectrice (11) comprend deux conducteurs électriques (16a, 16b) qui sont en contact respectif avec l'une des bagues collectrices (12a, 12b) au niveau d'un point de contact (17a, 17b) respectivement et les bagues collectrices (12a, 12b) dans l'agencement de bague collectrice (11) sont raccordées électriquement à la bobine d'excitation (8) au moyen des deux conducteurs électriques (16a, 16b) et
- dans lequel les conducteurs électriques (16a, 16b) sont respectivement entourés, au moins dans certaines zones, par un revêtement isolant (15a, 15b) qui, au moins au niveau du point de contact respectif (17a, 17b), constitue la surface d'arbre (14) avec laquelle les bagues collectrices (12a, 12b) sont en contact,
**caractérisé en ce que**
le conducteur électrique respectif (16a, 16b), au niveau du point de contact respectif (17a, 17b), comprend au moins un moulage de compression (19a, 19b) qui fait saillie depuis le revêtement isolant respectif (15a, 15b) radialement par rapport à la direction longitudinale (20) de l'arbre (6) et fixe les bagues collectrices respectives (12a, 12b) à l'arbre (6) dans un agencement de serrage.

2. Générateur électrique selon la revendication 1,
**caractérisé en ce que**
le au moins un moulage de compression (19a, 19b) établit un contact électrique entre le conducteur électrique respectif (16a, 16b) et la bague collectrice respective (12a, 12b).

3. Générateur électrique selon la revendication 1 ou 2,
**caractérisé en ce que**
le au moins un moulage de compression (19a, 19b) est configuré avec un profil incliné.

4. Générateur électrique selon l'une quelconque des revendications 1 à 3,
**caractérisé en ce que**
- le revêtement isolant respectif (15a, 15b), avec le conducteur électrique respectif (16a, 16b), est fixé dans un évidement en forme de fente dans l'arbre (6), et
- le revêtement isolant respectif (15a, 15b) et l'arbre (6) forment ensemble la surface d'arbre (14) sur laquelle la bague collectrice respective (12a, 12b) est fixée en contact circonférentiel.

5. Générateur électrique selon l'une quelconque des revendications 1 à 3,
**caractérisé en ce que**
- le revêtement isolant respectif (15a, 15b), avec le conducteur électrique respectif (16a, 16b), entoure l'arbre (6), au moins dans certaines zones, radialement par rapport à la direction longitudinale de l'arbre (20) et
- le revêtement isolant respectif (15a, 15b), au moins dans certaines zones, constitue la surface d'arbre (14) sur laquelle la bague collectrice respective (12a, 12b) est fixée en contact circonférentiel.

6. Générateur électrique selon la revendication 5,
**caractérisé en ce que**
- des éléments d'ajustement de forme ou d'ajustement par pression sont formés sur l'arbre (6) et/ou sur la surface interne de l'agencement de bague collectrice (11) et
- l'agencement de bague collectrice (11) est fixé à l'arbre (6) par le biais des éléments d'ajustement de forme ou d'ajustement par pression par ajustement de forme ou par ajustement par pression.

7. Générateur électrique selon l'une des revendications précédentes,
**caractérisé en ce que**
le revêtement isolant respectif (15a, 15b) est composé d'un matériau isolant (15), spécialement d'une matière plastique.

8. Générateur électrique selon l'une des revendications précédentes,
**caractérisé en ce que**
- un diamètre de la surface d'arbre (14) au niveau du point de contact respectif (17a, 17b) correspond à un diamètre interne de la bague collectrice respective (12a, 12b) et
- le diamètre de la surface d'arbre (14) au niveau du premier point de contact (17a, 17b) est différent du diamètre de la surface d'arbre (14) au niveau de l'autre point de contact (17a, 17b) de telle sorte que les bagues collectrices (12a, 12b) puissent être montées sur l'arbre l'une après l'autre.

9. Générateur électrique selon l'une des revendications précédentes,
**caractérisé en ce que**
- le conducteur électrique respectif (16a, 16b) s'étend le long de la direction longitudinale (20) de l'arbre (6) à partir du point de contact respectif (17a, 17b) jusqu'aux pôles à griffes (4, 5) et
- au niveau des pôles à griffes (4, 5), le conducteur électrique respectif (17a, 17b) fait saillie radialement depuis l'arbre (6) et forme un élément de contact électrique (18a, 18b), qui est raccordé électriquement à la bobine d'excitation (8).

10. Générateur électrique selon la revendication 9,
**caractérisé en ce**
**qu'**au niveau des pôles à griffes (4, 5), le revêtement isolant respectif (15a, 15b) fait saillie radialement depuis l'arbre (6) avec une distance axiale jusqu'à l'élément de contact électrique (18a, 18b) et forme un collier isolant entre les pôles à griffes (4, 5) et l'élément de contact électrique (18a, 18b).

11. Procédé pour produire le générateur électrique (1) selon l'une quelconque des revendications précédentes,
dans lequel le diamètre de la surface d'arbre (14) au niveau du premier point de contact (17a, 17b) est différent du diamètre de la surface d'arbre (14) au niveau de l'autre point de contact (17a, 17b) et les bagues collectrices respectives (12a, 12b) sont montées sur l'arbre l'une après l'autre.

12. Procédé selon la revendication 11,
**caractérisé en ce que**
l'agencement de bague collectrice (11) du générateur électrique (1) entoure l'arbre (6) et l'agencement de bague collectrice (11) est monté sur l'arbre (6) par ajustement de forme ou par ajustement par pression.

13. Procédé selon la revendication 12,
**caractérisé en ce que**
l'agencement de bague collectrice (11) est fixé sur l'arbre (6) avec des éléments d'ajustement de forme ou d'ajustement par pression (21) formés sur l'arbre (6) et/ou sur une surface interne de l'agencement de bague collectrice (11).

14. Procédé selon la revendication 12 ou 13,
**caractérisé en ce que**,
- avant que l'agencement de bague collectrice (11) ne soit monté sur l'arbre (6), les bagues collectrices (12a, 12b) sont montées sur la surface d'arbre (14) formée par le revêtement isolant (15a, 15b) par agencement de forme et
- un diamètre interne de l'agencement de bague collectrice (11) est accru au niveau des points de contact (17a, 17b) par et après le montage sur l'arbre (6) de telle sorte qu'après que l'agencement de bague collectrice (11) est monté sur l'arbre (6), les bagues collectrices (12a, 12b) soient montées sur la surface d'arbre (14) par ajustement par pression.

15. Procédé selon la revendication 12 ou 13,
**caractérisé en ce que**
les bagues collectrices (12a, 12b) sont montées sur l'agencement de bague collectrice (11) après que l'agencement de bague collectrice (11) est monté sur l'arbre (6).
